# EUROPEAN PATENT SPECIFICATION

(11) **EP 4 074 768 B1**
(45) Date of publication and mention of the grant of the patent: **08.07.2026**
(21) Application number: 21168674.6
(22) Date of filing: 15.04.2021
(51) Int. Cl.: C08J 11/06, C08J 11/08

(54) **SOLVENT BASED RECYCLING PROCESS OF POLYOLEFINS**
LÖSUNGSMITTELBASIERTES RECYCLINGVERFAHREN FÜR POLYOLEFINE
PROCÉDÉ DE RECYCLAGE DE POLYOLÉFINES À BASE DE SOLVANT

(43) Date of publication of application: 19.10.2022
(73) Proprietor: Borealis GmbH, 1020 Vienna (AT)
(72) Inventor: AL-HAJ ALI, Mohammad, 06850 Kulloo (FI); AJELLAL, Noureddine, 06850 Kulloo (FI); SATTAR, Mubashar, 06850 Kulloo (FI); ELOVAINIO, Erno, 06101 Porvoo (FI); SLEIJSTER, Henry, 6161 Sittard-Geleen (NL)
(74) Representative: Kador & Partner Part mbB

(56) References cited:
- DE-A1- 102016 015 199
- DE-A1- 19 806 355
- US-A1- 2019 322 832
- US-A1- 2021 008 763

## Description

The present invention generally relates to solvent based recycling processes of polyolefins. More particularly, the present invention relates to a solvent-based recycling process for polyolefins, which produces virgin-like polymers, has low requirements on heavy-duty equipment of the process equipment, and can preferably be carried out in a continuous manner.

### Background

The challenge of the disposal of accumulated waste plastics and corresponding environmental issues have received widespread attention from the public and academician. Therefore, besides the concepts of the prevention of plastic waste in general and the prevention of leakage of plastic waste into the environment in particular, recycling of waste plastics material has become an important topic. Waste plastics can be turned into resources for new plastic products. Hence, environmental and economic aspects can be combined in recycling and reusing waste plastics material.

Mid of the 90-ies, several European countries have implemented a more differentiating waste collection system (Recycling Management System, Circular Economy Law), which actually allows a more target orientated collection and separation of plastic materials from other waste materials. Thus, a more or less efficient separation of polymer types from each other can be managed to achieve, after the treatment, finally polymer types enriched and thus more easily recyclable secondary plastic material fractions. The build-up of a suitable waste collection system and especially the set-up of a suitable waste separation infrastructure took place within the last decades to generate a secondary petrochemical raw material source resp. market. Parallel, several plastic recycling processes have been developed resp. in particular improved, primary with the target to increase the achievable product quality of the recyclable polymer materials.

There are different methods of plastic recycling commonly known including mechanical [material recycling], advanced physical or solvent based [solution] and chemical processing [(feedstock recycling, thermochemical such as pyrolysis or gasification, solvolysis]. Among these methods, mechanical recycling and chemical recycling are the most widely practiced.

Although, EU-public collection and pre-sorting systems reached plastic collection rates up to 76 [wt.% (Ger)] in 2018, the direct plastic material recycling rates have been on a lower level for mechanical advanced recycling processes (e.g. 12 [%] for Germany in 2018). Today, advanced mechanical recycling includes separation steps such as shredding, vibrating, rotary sieving, advanced sorting methods supported by spectrometric-methods [e.g. NIR/VIS] and wash operations to reduce organic, biologic and partly odour contaminants primary from the surface of the recyclable plastic material, as well as achieving a polymer type enriched and more homogeneous polymer recyclate fraction. Thereby, plastic type-enriched resp. especially polyolefin-enriched secondary mass streams (> 85; < 95 [wt.%] PO-content) can be obtained such as for example Polypropylene (PP), High-Density-Polyethylene (HDPE), Low-Density-Polyethylene (LDPE), Polyethylene-Terephthalate (PET) and/or Polystyrene (PS). Following, these separated mass streams will be processed to granules (extrusion) and material specific into products converted. Nevertheless, the achievable product quality remains relatively poor and does not allow both food contact and high performance applications and thus products such as flower pots, paint buckets or shampoo bottles are typically for the mechanically recycled materials today.

Especially improved and better performing sorting methods (e.g. colouring flake sorting) should effect both higher concentrations within the specific polymer type fraction and secondary wash operations to reduce more efficiently disturbing contaminants resp. to increase the product quality of the final secondary polymer raw material. Latter includes additionally expenditures concerning a complex process design, waste water treatment, exhaust gas treatment and intermediate product drying coupled with an increased total energy consumption, while keeping emissions as low as feasible.

However, the challenges of difficulties to remanufacture directly mechanical polymer recyclates into high-quality end applications remain, caused by waste components such as multi-layer materials resp. films or mixed flexible film waste materials. Further, important reason can be found in the less predictable and controllable homogeneity of the polymer type material mixture concerning especially historically applied polymerization technology (define material properties such as polymer density, average molecular weight, molecular weight distribution, molecular structure, cross-linking level) and historically applied compounding technology (additive-, filler concentrations and finally multiple pigment compositions). All these quality concerning factors remain inside the mechanically processed bulk mass mixture and cannot be covered by mechanical sorting and applied purification methods, which interact in best case onto the surface of the recyclable polymer material mixture.

A further approach to overcome the lower quality in advanced mechanical polymer recycling can be found in blending mechanical polymer recyclates with virgin polymers, finally to achieve a tolerable, marketable quality for the end application (non-food), whereby the implementable content of mechanically recycled polymer materials stays on a lower level (several [wt.%]), especially for high-quality/high performance end applications.

The second arising plastic recycling route is chemical or feedstock recycling, concerning solvolysis and thermochemical processing. In 2018 the technology share rate of chemical plastic recycling was less than 2 [%] in total. A technology prognosis indicates, that the thermochemical recycling share rate should significantly increase from less than 2 [%] (2018) up to 13 [%] until 2030. However, chemical plastic recycling provides a promising opportunity to recover pre-sorted and pre-treated solid plastic waste anyhow to obtain feedstock for the petrochemical industry, which can be processed to plastics again, as well as to chemical commodities and fuels. To degrade the polymeric structure of the plastic solid mixture to shorter hydrocarbons up to monomeric building blocks, heat, catalysts and solvents have to be applied. Depending on the specific technology, chemical recycling approaches have much higher tolerances towards mixed plastic fractions and impurities and thus are principally capable to deal with contaminated and polymer material mixtures resp. secondary polymeric raw materials. Nevertheless, cross-contaminations of polyolefinic material mixtures with heteroatomic polymers (N/O/S, Halogene) should be preferably avoided.

Nevertheless, abstraction of especially thermochemical plastic processing, especially polyolefin recycling technologies illustrates rather the substitution of fossil based crude oil fractions to already fossil based secondary polymer recyclate materials by applying well-known traditional thermochemical unit operations, which have to be adapted costly to the secondary feedstock source. The specific energy demand remain, concerning the heat-intensive endothermic C-C resp. C-H bonding breakages (cracking, degradation), so that finally the total energy input is significantly higher in comparison to crude oil to virgin polymer processing - principally the degradation of a short chain molecule (e.g. Naphtha within crude oil fractionation) will be replaced by cracking long chain and branched polymers. Independently, the extravagant and energy-consuming thermal degradation remains. Furthermore, the CO₂-emissions of such processes are also higher as long as the necessary applied energy carrier could not easily switched to renewable/sustainable energy carriers.

The third plastic recycling route is advanced physical or Solvent based Recycling (SbR), which showed a plastic recycling market share of less than 1 % in 2018 in Germany. In SbR-processing the polymer will be initially dissolved in an appropriate solvent and following, either the solubility of the dissolved polymer will be decreased by the addition of a non-solvent (dissolution/precipitation) and/or a solidification of the polymer will be caused by the preferably complete separation of the solvent from the solidified polymer by thermal unit operations (evaporation, drying etc.).

Polyolefin-SbR-processing show similarities to traditional PO-polymerization processes, whereby the solvent for the monomers (olefins) and temporary formed oligomers (waxes) and short chain polymers is for example a refinery fraction (e.g. kerosene) until the solubility limits will be exceeded (long chain polyolefins are formed during polymerization) and the final polyolefin precipitates forming a polyolefin-solvent slurry (e.g. Chevron slurry process). An extraordinary polyolefin process is the solution PO-polymerisation process, whereby the olefin is initially dissolved in a paraffinic solvent blend, polymerized and the finalized polyolefin will stay in solution until the process conditions will significantly change by depressurization resp. flash devolatilization.

The framework of commonly known waste plastics material solvent based recycling processes includes the removal of impurities, dissolution, and reprecipitation/recrystallization and/or devolatilization of the polymer. Specifically, the one or more polymer is dissolved in one or more solvent, and subsequently, each polymer is selectively precipitated/crystallized. Ideally, if a solvent can dissolve either the target polymer or all the other polymers except the target polymer, it can be used for selective dissolution.

It is generally a desire to produce virgin-like polymers by waste plastics material solvent based recycling processes, whereas virgin-like is defined as contaminant-free, pigment-free, odor-free, homogeneous and generally similar in properties to freshly polymerized polymers. The need for high quality, virgin-like recycled resins is especially important for food and drug contact applications, such as food packaging. In addition to being contaminated with impurities and mixed colorants, many recycled resin products are often heterogeneous in chemical composition and may contain a significant amount of polymeric contamination, such as polyethylene contamination in recycled polypropylene and vice versa.

EP 3 339 361 (A1) describes a polymer solvent based recycling process including the step of contacting a waste polymer at a temperature of 110 t0 170 °C and at a pressure of 1,100 psig to 2,100 psig with n-butane. This step is repeated four times. The residue of this step is subsequently dissolved again in n-butane at 130 to 180 °C and 2,000 psig to 3,000 psig. Furthermore, settling and removal of non-dissolved polymer is performed and an adsorption step is added using a pure silica bed followed by an aluminium-oxide (zeolite) bed at 130 to 180 °C and 350 psig to 20,000 psig. The polymer is then precipitated from the solvent.

The disadvantage of this process lies in the higher pressure used during processing, which needs heavy duty equipment and causes high investment costs, as the material strength of the plant must be sufficiently dimensioned.

DE 102016015199 A1 is using an atmospheric dissolving process for the separation of post-industrial consumer waste, in particular the separation of polyamide, polyethylene and/or polypropylene. Solvent is a higher non-polar gasoline (kerosene) fraction having boiling point temperatures of 80 to 140 °C.

Disadvantage of this process is the high residual solvent content in the intermediate polymer product (up to 5 vol.-%). Removing these unwanted solvent requires complex and expensive post-treatment processing by thin film evaporators (low throughput) and dryers. The exhaust gas contains hydrocarbons and thus high volume off-gas treatment plants are needed.

### Problem of the invention

Therefore, generally, the polymer solvent based recycling processes and in particular the polyolefin solvent based recycling processes known in the prior art either are high pressure processes having the disadvantage of high costs and efforts or are directed to high boiling point solvents causing problems in the after process-treatment in particular in view of removing the solvent, thus not being able to provide virgin-like recycled polyolefins.

Furthermore, many of the solvent based recycling processes of polyolefins described in the prior art are designed in a way that no continuous process is possible. As already mentioned earlier, one problem can be high pressure process technique. However, also the feeding process technique and the sorting might affect the possibility of performing the process in a continuous manner.

### Object of the invention

It is therefore an object of the present invention to find a solvent based recycling process for polyolefins allowing for the production of virgin-like polyolefins and having low requirements in view of material strengths, staff experience and costs.

It is a further object of the invention to provide a continuous solvent based recycling process of polyolefins.

### Summary of the invention

It has now surprisingly found that said object can be achieved by a solvent based recycling process for recycling waste polymer as claimed in claim 1.

The advantage of the process of the present invention is that the solvent-based recycling process can be performed at lower pressures than shown in the prior art and at the same time maintain the ability to remove solvents readily and economically from the final polymer. Furthermore, the recycled solvents can be reintroduced into the solvent based recycling process, further reducing energy and material demand and also costs. Furthermore, the process uses a low number of unit operations reducing maintenance effort and downtime probability. Moreover, the process of the present invention is able to separate more than one polymer during recycling. Finally, the produced polymer has no significant amount of polymeric cross contamination, is essentially colorless, and essentially odorless (i.e. virgin-like).

### Definitions

The expression *'volatiles'* or *'volatile compounds'* as used herein has to be understood as compounds having significantly lower molecular weight in comparison to the polyolefin separated in the process of the invention. Such compounds typically are present in the gaseous form when being exposed to a flash separator. Commonly, the volatile compounds are a mixture of volatile hydrocarbons. Preferably, the mixture of volatile hydrocarbons comprises at least one solvent.

*'Flash separators'* have been known in the prior art for decades (also as low-pressure separators). As it is well known in the art, a liquid feed is passed to a flash vessel operated at a reduced pressure. Thereby a part of the liquid phase vaporizes and can be withdrawn as an overhead stream (or a vapor stream) from the low pressure separator. The part remaining in liquid phase is then withdrawn as a bottom stream or a liquid stream from the flash vessel. Operating the low pressure separator under conditions such that both vapor and liquid phases are present in the flash vessel describes this situation.

*'Gravity separators'* or *'liquid-liquid separators'* as used herein comprise a vessel in which a two-phase (i.e. liquid/liquid) system can be separated. The liquid phase with the lower relative density (polymer-lean stream) is withdrawn from the upper end of the vessel whereas the liquid phase with the higher relative density (in the present case the polymer-rich stream) is withdrawn from the bottom end of the vessel.

### Description of the drawings

Figure 1 shows a general phase diagram for the understanding of the LCST concept and liquid-liquid separation.
Figure 2 shows a schematic layout of the most general embodiment of process of the present invention.
Figure 3 shows a schematic layout of the most general embodiment of process of the present invention including an additional homogenization step and a liquid-liquid separation step.
Figure 4 shows a schematic layout of a preferred embodiment of the present invention including (multiple) liquid-liquid separation step(s).
Figure 5 shows a schematic layout of a preferred embodiment of the present invention including an extraction step as pre-treatment step.
Figure 6 shows a schematic layout of a preferred pre-treatment step a') of the present invention.

### Reference signs

- 1: waste polymer material
- 1a: molten waste polymer material
- 2: polyolefin
- 3: dissolving solvent
- 3e: extracting solvent
- 4: slurry of undissolved solids and polymer solution
- 5: polymer solution
- 6: undissolved solids
- 7: polymer-lean stream (produced in a liquid-liquid separation step)
- 8: polymer-rich stream (produced in a liquid-liquid separation step)
- 9: polymer-lean vapor stream (produced in a vapor-liquid separation step)
- 10: polymer-rich condensed stream (produced in a vapor-liquid separation step)

| | |
|---|---|
| a) | step of obtaining the waste polymer material (1) |
| a') | step of pre-treating the waste polymer material (1) |
| b) | step of dissolving the polyolefin (1) |
| c) | step of screening the polymer solution |
| c') | step of homogenizing the polymer solution |
| c") | step of liquid-liquid separating polyolefin from the polymer solution (5) |
| d) | step of vapor-liquid separating the polymer from the solvent from either the polymer solution (5) or the polymer-rich stream (8) |
| e) | step of recovering the polyolefin (2) |

It should be understood that steps c") and d) can occur multiple times in a row, therefore they can be denoted as c"₁ or d₂, whereas the index points to the order in the serial processing of the steps (i.e. 1 → first, 2 → second). The same holds for streams connected downstream to said multiple processes as well as processes connected downstream thereto (i.e. e₂)

### Detailed description of the invention

The process according to the present invention is a solvent based recycling process for recycling waste polymer material (1), the waste polymer material (1) comprising at least one polyolefin (2), the process comprising the steps of
a) obtaining the waste polymer material (1) comprising the at least one polyolefin (2);
b) contacting the waste polymer material (1) with at least one dissolving solvent (3) yielding a slurry stream (4) of polymer solution (5) and undissolved solids (6);
c) screening the slurry stream (4) yielding the undissolved solids (6) and a stream of the polymer solution (5);
d) vapor-liquid separating the polymer solution (5) into a polymer-lean vapor stream (9) and a polymer-rich condensed stream (10), wherein the polymer-lean vapor stream (9) is reintroduced into the contacting step b) after purification and upon adjustment of temperature and pressure;
e) recovering the at least one polyolefin (2) from the polymer-rich condensed stream (10);
   wherein the at least one dissolving solvent (3) has a boiling point temperature at 1 bar of equal to or more than 70 °C, wherein the process further comprises subsequent to step c) and preceding step d) the step of:
   c") liquid-liquid separating the stream of the polymer solution (5) into a polymer-lean stream (7) and a polymer-rich stream (8), wherein the polymer-rich stream (8) is fed to step d) and the polymer-lean stream (7) is recycled to contacting step b).

The waste polymer material (1), can contain different plastics such as polyethylene (PE) or polypropylene (PP), in particular high density polyethylene (HDPE), low-density polyethylene (LDPE) or linear low-density polyethylene (LLDPE), poly(ethylene terephthalate) (PET), polypropylene (PP), poly(vinyl chloride) (PVC), polystyrene (PS), polycarbonate (PC), polyurethanes (PUR) and polyamides (PA). Preferably, the waste polymer material (1) has a polyolefin content of higher than 75 wt.-%, more preferably of higher than 80 wt.-% and most preferably higher than 85 wt.-%. The waste polymer material (1) further can comprise waste impurities, such as common additives, such as antioxidants, food residues, residual perfume components, dyes and pigments, and generally components inevitably introduced in plastic waste material by production and usage. In addition to contaminations, many recycled resin products are often heterogeneous in chemical composition and may contain a significant amount of polymeric contamination, such as PE contamination in recycled PP and vice versa.

The polyolefin (2) recycled by the process of the present invention can be a mixture of polyolefin classes such as polypropylene or polyethylene. Preferably, however, the polyolefin (2) comprises, preferably consists of a single polyolefin class. Most preferably, the polyolefin (2) comprises, preferably consists of polypropylene. It should be understood that in the latter case polyethylene residues can be again dissolved at increased temperatures and residence times with the same dissolving solvent (3) and separated according to the present invention.

Generally, the dissolving solvent (3) must be able to solve polyolefins, in particular the polyolefin (2). Therefore, preferably, the dissolving solvent (3) is a non-polar solvent or a mixture thereof. Therefore, the solvent preferably is a hydrocarbon or a mixture of hydrocarbons. More preferably, the dissolving solvent (3) is a paraffinic solvent or a mixture of paraffinic solvents due to paraffinic nature of polyolefins ('*Similia similibus solventum'*). Aromatic hydrocarbon solvents are known for good solvent properties and can therefore also be considered. Nevertheless, a drawback of aromatic hydrocarbons lies in enhanced dissolution of polystyrene. On the other hand, e.g. n-alkanes are known as not dissolving polystyrene. Most importantly, the solvent should not dissolve polar polymers such as PET, PVC, PA, PC, PUR, or bio-based fractions such as cellulose or lignin. Furthermore, the boiling point at 1 bar pressure of the dissolving solvent (3) must be higher than 70 °C. Therefore, preferably, the dissolving solvent is selected from the list of low boiling solvents and high boiling solvents or mixtures thereof. Low boiling solvents comprise n-alkanes and aromatic hydrocarbons, such as toluene and xylene. The advantage of low boiling solvents is that they can be separated from dissolved polyolefins via evaporation. High-boiling solvents comprise paraffinic gas oil or vacuum gas oil. Such solvents have the disadvantage that they are difficult to be removed from the product. Therefore, preferably, the dissolving solvent (3) is selected from n-alkanes or mixtures thereof having a boiling point at 1 bar pressure of more than 70 °C and preferably not more than 150 °C, more preferably not more than 140 °C, even more preferably not more than 100 °C and most preferably not more than 90 °C. Most preferably, the dissolving solvent (3) is selected from the group consisting of n-heptane, n-octane, n-nonane, and n-decane or mixtures thereof.

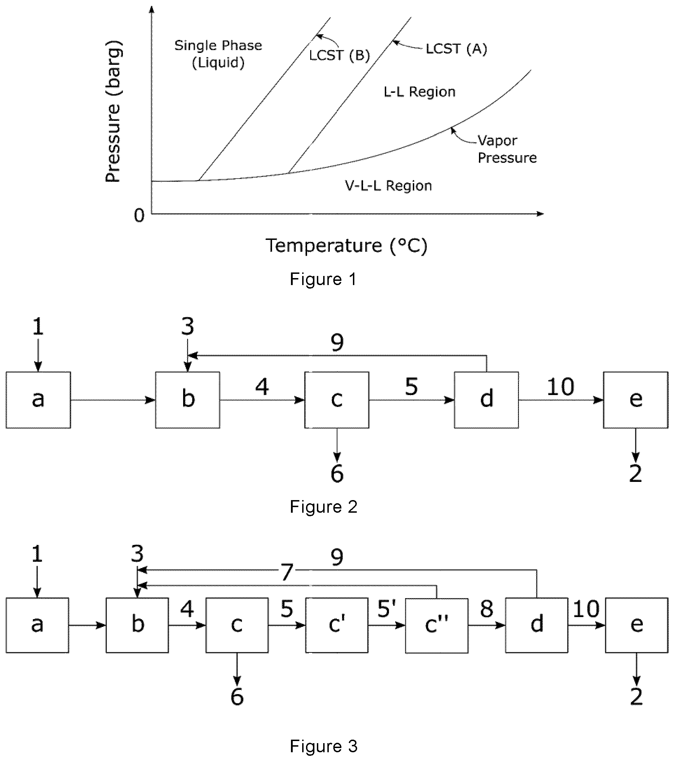

The step a) of obtaining the waste polymer (1) comprises the steps of preparing the waste polymer (1) from general waste, including washing the waste with aqueous and/or caustic solutions to remove unwanted material from the waste polymer (cf. Figures 2-5). Furthermore, the size of the pieces of waste polymer is preferably reduced in step a), preferably by cutting, milling, and shearing, or mixtures thereof.

The step b) of contacting the waste polymer (1) with at least one dissolving solvent (3) is preferably a dissolution step (cf. Figure 2). Hence, preferably, the polyolefin (2) is dissolved in the dissolving solvent (3) (cf. Figures 2-5). On the other hand, the resulting slurry (4) still can comprise undissolved solids (6) besides the polymer solution (5). Such solids can either be non-polymeric solids, such as pigments or additives not soluble in the dissolving solvent (3) or polymers. Such polymers can be either polar polymers, which are not solvable in the used solvent, or non-polar polymers, which are not solvable under the conditions used in the dissolution step. Preferably, the dissolved polymer in the polymer solution (5) is the polyolefin (2).

The step b) of contacting can be carried out in that only a single target polyolefin is dissolved by the dissolving solvent (3). Such a configuration is in particular applicable, if the target polyolefin dissolves at lower temperatures than all other polyolefins present in the waste polymer material (1). In another embodiment of step b), the conditions are chosen so that even two or more polyolefins are dissolved, i.e. polymer A and polymer B. In such a case, subsequent liquid-liquid separation steps are beneficial to separate the solubilized polymers from each other (cf. below). Mainly polypropylene can be dissolved from a polyethylene/polypropylene mixture using non-polar solvents with Hansen solubility parameters, which are similar/nearby to those of the polypropylene. Preferably, the conditions are chosen to exhibit temperatures between 100 and 300 °C, more preferably between 110 to 290 °C, and most preferably between 120 to 280 °C. Preferably, the pressure used in step b) is in the range of 5 to 50 bar, preferably from 7 to 45 bar, and most preferably from 10 to 40 bar.

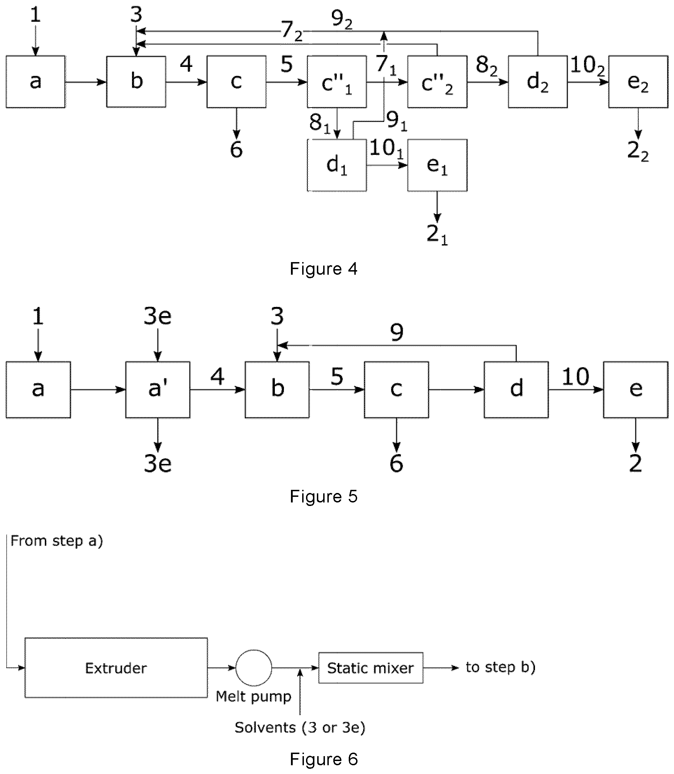

The waste polymer material (1) can be brought into contact with the dissolving solvent (3) either in solid or in molten form. Preferably, the waste polymer material (3) is molten allowing for a quick and thorough mixing of both, the polymeric material and the dissolving solvent (3), i.e. reducing the time necessary for completely solving the polymer material (cf. Figure 6). Generally, reducing the time necessary to solve the polymeric material supports the implementation of the dissolving step in a continuous manner. Preferably, the slurry of the waste polymer material (1) and the dissolving solvent (3) is stirred to further reduce the time necessary for solving the polyolefin (2). Preferably, the dissolving step b) is carried out not longer than 1 h.

In step c) the undissolved solids (6) are preferably removed from the polymer solution (5) by solid-liquid separation (cf. Figures 2-5). Preferably, step c) can be selected from hot filtration, discharging over a screw conveyor, centrifugation, filtering, and solid/liquid extraction, or mixtures thereof. The undissolved solids (6) can be collected and be dissolved in a separate process to recover other polymer fraction comprised therein. Step c) can also be a cascade of said solid-liquid separations.

Furthermore, even more preferably, in step c) also other unwanted materials still solubilized in the polymer solution (2) are screened from the said polymer solution (2). Such materials include additive, colors, antioxidants, odors and mixtures thereof. Most preferably, the screening step is performed by desorption of the unwanted materials. Preferably, the desorption process is carried out with the help of a sorption helper, to which the unwanted materials adsorb or into which the unwanted materials absorb. The sorption helper might also bind the unwanted materials by size exclusion, ion exclusion, ion exchange, and other mechanisms. Furthermore, pigments and other materials commonly found in the waste polymer material may be polar compounds and may preferentially interact with the sorption helper, which therefore may also be at least slightly polar. The polar-polar interactions are especially favorable when non-polar solvents, such as alkanes, are used as the dissolving step solvent.

The sorption helper is preferably selected from the group consisting of inorganic substances, carbon-based substances, and mixtures thereof. Non-limiting examples of inorganic substances are silicon oxide (silica), silica gel, aluminum oxide (alumina), iron oxide, aluminum silicate, magnesium silicate, amorphous volcanic glass, reclaimed glass, sand, quartz, diatomaceous earth, zeolite, perlite, clay, fuller's earth, bentonite clay, metal organic framework (MOF), covalent organic framework (COF), and zeolitic imidazolate framework (ZIF). Non-limiting examples of carbon-based substances are anthracite coal, carbon black, coke, and activated carbon. In one embodiment of the present invention, said inorganic substances are selected from the group consisting of silicon oxide (silica), silica gel, aluminum oxide (alumina), iron oxide, aluminum silicate, magnesium silicate, amorphous volcanic glass, reclaimed glass, sand, quartz, diatomaceous earth, zeolite, perlite, clay, fuller's earth, bentonite clay, metal organic framework (MOF), covalent organic framework (COF), zeolitic imidazolate framework (ZIF), and mixtures thereof. In another embodiment of the present invention, said inorganic substances are selected from the group consisting of silicon oxide (silica), silica gel, aluminum oxide (alumina), amorphous volcanic glass, reclaimed glass, sand, quartz, diatomaceous earth, zeolite, clay, fuller's earth, bentonite clay, and mixtures thereof. In yet another embodiment of the present invention, said carbon-based substances are selected from the group consisting of anthracite coal, carbon black, coke, activated carbon, and mixtures thereof.

The polymer solution (5) is subsequently fed to a step c") of liquid-liquid separation into a polymer-lean stream (7) and a polymer-rich stream (8). Under certain conditions of temperature and pressure, the polymer solution phase separate into two distinct liquid phases, one which is "lean" in dissolved polymer and one which is "rich" in dissolved polymer. Phase separation occurs at the lower critical solution temperature (LCST), also known as the "cloud point" (cf. Figure 1). This phenomenon of phase separation has been well known in the art for many years. Details regarding phase separation, can, for instance, be found in de Loos et al., "Liquid-Liquid Phase Separation in Linear Low Density Polyethylene Solvent Systems", Fluid Phase Equilibria 117 (1996) 40-47, Irani et al., "Lower Critical Solution Temperature Behavior of Ethylene Propylene Copolymers in Multicomponent Systems", Journal of Applied Polymer Science, Vol. 31, 1879-1899 (1986), Chan et al., "Fluid-Liquid Transitions of Poly(ethylene-co-octene-1) in Supercritical Ethylene Solutions," Ind. Eng. Chem. Res. 2000, 39, 4370-4375, Nagy et al., "High pressure phase equilibria in the system linear low density polyethylene+isohexane: Experimental results and modelling", J. of Supercritical Fluids 40 (2007) 125-133, in *"*Handbook of Polymer Synthesis, Characterization, and Processing" First edition, edited by Enrique Saldivar-Guerra, Eduardo Vivaldo-Lima, published 2013 by John Wiley & Sons, Inc, in particular chapter 15, pages 317 to 334, as well as in the references cited in the aforementioned documents.

Increasing the temperature or decreasing the pressure at the cloud point leads to further phase separation. In other words, phase separation is encouraged by higher temperatures and/or by lower pressures. The cloud point is determined in part by the pressure, temperature, solution composition and the solvent used for polymerization.

With reference to Figure 1, the separation principle of two polymers in a L/L separation step is explained in the following. In this figure, the phase diagrams of two polymers (A) and (B) are depicted simplified in that the function delimiting the V-L-L region is assumed to be equal for both polymers. Therefore, under conditions above this function, the polymer and the solvent are present without any further vapor phase. Nevertheless, this condensed region can again be split in a single phase region and a L-L region, in which the mixture is present in two liquid phases, wherein one liquid phase comprises mainly polymer, the other mainly solvent. Both regions are divided from each other by the lower critical solution temperature (LCST), a pressure dependent function. If both polymers (A) and (B) are present in the polymer solution, another region exists, namely between the LCST of (B) and the LCST of (A). In this region, polymer (A) is still solubilized in the liquid phase, wherein polymer (B) is already separated. Therefore, in such a system, polymer (B) can be separated with the polymer-rich stream, whereas polymer (A) can be separated with the polymer-lean stream. The polymer-lean stream can then again be subject to a L/L separation step (cf. Figure 4). As can be seen from the diagram in Figure 1, the region between the LCST functions can be reached by either adjusting the pressure (reducing, when starting in the single phase region) or the temperature (increasing, when starting from the single phase region). However, the pressure should never be reduced so far that the V-L-L region is reached.

In case a step c") is used (cf. Figures 3 and 4), the polymer-rich stream (8, 8₁, 8₂) is introduced into step d) (d₁ and d₂ for Figure 4). Liquid-liquid separation of step c") is preferably carried out at a temperature of 120 to 250 °C and at a pressure of 10 to 100 bar. Generally, step c") can be used to separate polymers from a liquid phase. Therefore, in case in step b) only one polyolefin is dissolved into the polymer solution, step c") can be carried out, but is not necessary to be carried out due to the remaining steps d) and e) of the process of the invention. However, in case in step b) more than one polyolefin is solved into the polymer solution, step c") can be used to separate the polymer solution in that the polymer-rich stream carries one polyolefin, and the polymer-rich stream carries another. Each of these streams is in this case subjected to the follow-up steps d) and e) of the process of the present invention. In case the polymer solution contains more than two polyolefins, the conditions in a first liquid-liquid separation step of step c") are preferably chosen to have one polyolefin in the polymer-rich stream and the other two in the polymer-lean stream. The polymer-lean stream is again subjected to a second liquid-liquid separation step of step c") separating the remaining two polymer from each other (cf. Figure 4). Therefore, step c") can be a cascade of liquid-liquid separation steps in case more than one polymer is solved in the polymer solution (5).

In an even more preferred embodiment of the invention involving a step c") as set out above, another step c') subsequent to step c) and preceding step c") is carried out (cf. Figure 3). In this step the polymer solution (5) withdrawn from step c) is again homogenized. Thereby, the polymer solution (5) is stirred, preferably in a tank. Therein, the mixture is kept under conditions that ensure the polyolefin (2) is fully solubilized in the dissolving solvent (3). Preferably, the conditions are chosen similar to the conditions of step b). Furthermore, it is ensured that no gas phase exists in the system, i.e. the tank. Thus, the stream leaving the step c') is a stream of one phase. Preferably, the conditions are chosen to exhibit temperatures in between 100 and 300 °C, more preferably 110 to 290 °C, and most preferably 120 to 280 °C. Preferably, the pressure used in step b) is in the range of 5 to 50 bar, preferably from 7 to 45 bar, and most preferably from 10 to 40 bar. Preferably, the step c') is carried out to provide a stream of polymer solution (5) at a temperature of 120 to 250 °C and a pressure of 10 to 100 bar. The step c') yields a homogenized polymer solution (5'), which is then fed to the liquid-liquid separation step c").

If the polymer-lean stream (7) from step c") comprises mainly solvent, it can be reintroduced into the contacting step b) after purification of the solvent (cf. Figures 3 and 4). Preferably, the purification of the solvent includes the removal of molecules having lower and higher molecular weight than the solvent molecule. The polymer-lean stream (7) comprises mainly solvent in case only one polymer has been solved in the polymer solution (5) and one liquid-liquid separation step is used in step c"). However, in case more than one polymer is solved in the polymer solution, the polymer-lean stream (7) is the polymer-lean stream of the last liquid-liquid separation step of step c"), as in the polymer-lean stream of the preceding liquid-liquid separation steps still polymer is comprised. Recycling the polymer-lean stream into the contacting step b) has the advantage that less energy and material is consumed resulting in an economically and ecologically favorable process.

The vapor-liquid separating step d) of separating the polymer-rich stream (8) into a polymer-lean vapor stream (9) and a polymer-rich condensed stream (10) is preferably carried out as a flash separation step (cf. Figures 2 to 5). Preferably, step d) is carried out under conditions to allow volatile compounds in the polymer-rich stream (8) to evaporate from the condensed phase, which mainly comprises polymer. Preferably, temperatures used in step d) are between 100 and 400 °C, more preferably between 130 and 300 °C, and most preferably between 170 and 250 °C. Also preferably, the pressure used in step d) are preferably 1 to 15 bar, more preferably 1 to 5 bar and most preferably 1 to 3 bar. In case step d) is the only flash separation step in the process, the pressure conditions can be chosen to have vacuum conditions as the lower limit. Thereby, the polymer-rich condensed stream (10) leaving step d) is cooled down to 150 to 250 °C, preferably 170 to 230 °C, and most preferably 190 to 210 °C. Most preferably, step d) is preferably carried out at a temperature of 170 to 250 °C and at a pressure of 1 to 3 barg.

The polymer-lean vapor stream (9) is reintroduced into the contacting step b) after purification and upon adjustment of temperature and pressure to the requirements of the dissolution occurring in step b) (cf. Figures 2 to 5).

Step d) can be repeated multiple times, preferably up to 3 times in a row. Hence, in such a setup, the polymer-lean vapor phase (8) leaving the first step d) is again subject to a second flash separation step d'), thereby creating a second polymer-lean vapor phase (8'), which again can be subject to a third flash separation step d"). Each of the flash separating steps d) to d") produces a polymer-rich condensed stream (10), which can either be combined or further processed separately from each other. If the step d) is carried out multiple times in a row, the pressure is lowered step after step and the temperature is increased step after step. Thereby, the preference levels as described for the temperature and the pressure of step d) preferably determine the temperature and pressure used in steps d), d') and d"). In case a liquid-liquid separation step c") is also used preceding step d), the pressure can already be below 10 bar before entering step d). Therefore, the conditions in step d) need to be respectively changed, i.e. either the pressure of the polymer-rich stream of step c") increased or the temperature in step d) increased.

The step e) of recovering the polymer from the polymer-rich condensed stream (10), each of the polymer-rich condensed streams (10) to (10₂) or the combined polymer-rich condensed streams (10) to (10₂) is preferably carried out in an extruder (cf. Figures 2 to 5). Even more preferably, step e) is carried out in a devolatilization extruder. More preferably, the extruder has backward degassing means at atmospheric conditions and forward degassing domes at vacuum conditions. Most preferably, the extruder makes use of a water dosing in between the degassing domes.

Hence, in a preferred embodiment according to Figure 2, the solvent-based recycling process for recycling waste polymer material (1), the waste polymer material (1) comprising at least one polyolefin (2), comprises the steps of
a) obtaining the waste polymer (1) comprising the at least one polyolefin (2);
b) contacting the waste polymer (1) with at least one dissolving solvent (3) yielding a slurry stream (4) of polymer solution (5) and undissolved solids (6) , preferably at a pressure of from 10 to 40 bar and at a temperature of 120 to 280 °C;
c) screening the slurry stream (4) yielding the undissolved solids (6) and a stream of the polymer solution (5), preferably by solid-liquid separation and/or desorption;
d) vapor-liquid separating the stream of polymer solution (5) into a polymer-lean vapor stream (9) and a polymer-rich condensed stream (10), preferably at a temperature of 170 to 250 °C and at a pressure of 1 to 3 barg;
e) recovering the at least one polyolefin (2) from the polymer-rich condensed stream (10);

Moreover, in a preferred embodiment according to Figure 3, the solvent-based recycling process for recycling waste polymer material (1), the waste polymer material (1) comprising at least one polyolefin (2), comprises the steps of
a) obtaining the waste polymer (1) comprising the at least one polyolefin (2);
b) contacting the waste polymer (1) with at least one dissolving solvent (3) yielding a slurry stream (4) of polymer solution (5) and undissolved solids (6) , preferably at a pressure of from 10 to 40 bar and at a temperature of 120 to 280 °C;
c) screening the slurry stream (4) yielding the undissolved solids (6) and a stream of the polymer solution (5), preferably by solid-liquid separation and/or desorption;
c') homogenizing the polymer solution (5) yielding a homogenized polymer solution (5'), preferably at a pressure of from 10 to 40 bar and at a temperature of 120 to 280 °C
c") liquid-liquid separating the stream of the homogenized polymer solution (5') into a polymer-lean stream (7) and a polymer-rich stream (8), preferably at a temperature of 120 to 250 °C and at a pressure of 10 to 100 bar, and preferably returning the polymer-lean stream into step b),
d) vapor-liquid separating the polymer-rich stream (8) into a polymer-lean vapor stream (9) and a polymer-rich condensed stream (10), preferably at a temperature of 170 to 250 °C and at a pressure of 1 to 3 barg;
e) recovering the at least one polyolefin (2) from the polymer-rich condensed stream (10);

Moreover, in a preferred embodiment according to Figure 3, the solvent-based recycling process for recycling waste polymer material (1), the waste polymer material (1) comprising at least one polyolefin (2), comprises the steps of
a) obtaining the waste polymer (1) comprising the at least two polyolefins (2);
b) contacting the waste polymer (1) with at least one dissolving solvent (3) yielding a slurry stream (4) of polymer solution (5) and undissolved solids (6) , preferably at a pressure of from 10 to 40 bar and at a temperature of 120 to 280 °C;
c) screening the slurry stream (4) yielding the undissolved solids (6) and a stream of the polymer solution (5), preferably by solid-liquid separation and/or desorption;
c') optionally homogenizing the polymer solution (5) yielding a homogenized polymer solution (5'), preferably at a pressure of from 10 to 40 bar and at a temperature of 120 to 280 °C
c"₁) liquid-liquid separating the stream of the homogenized polymer solution (5') or the stream of polymer solution (5) into a polymer-lean stream (7₁) comprising a first polyolefin (2₁) and a polymer-rich stream (8₁) comprising a second polyolefin (2₂), preferably at a temperature of 120 to 250 °C and at a pressure of 10 to 100 bar, and preferably returning the polymer-lean stream into step b),
c"₂) liquid-liquid separating the polymer-lean stream (7₁) into a second polymer-lean stream (7₂) and a second polymer-rich stream (8₂) comprising the second polyolefin (2₂), preferably at a temperature of 120 to 250 °C and at a pressure of 10 to 100 bar, and preferably returning the second polymer-lean stream (7₂) into step b),
d₁) vapor-liquid separating the polymer-rich stream (8₁) into a polymer-lean vapor stream (9₁) and a polymer-rich condensed stream (10₁), preferably at a temperature of 170 to 250 °C and at a pressure of 1 to 3 barg; and preferably returning the polymer-lean vapor stream (9₁) into step b)
d₂) vapor-liquid separating the second polymer-rich stream (8₂) into a second polymer-lean vapor stream (9₂) and a second polymer-rich condensed stream (10₂), preferably at a temperature of 170 to 250 °C and at a pressure of 1 to 3 barg, and preferably returning the second polymer-lean vapor stream (9₂) into step b);
e₁) recovering the second polyolefin (2₂) from the polymer-rich condensed stream (10₁);
e₂) recovering the first polyolefin (2₁) from the polymer-rich condensed stream (10₂);

This particular embodiment has the advantage that two polymers can be dissolved at the same time in the process and can be therefore separated in a single, continuous process, enhancing process economics.

Preferably, the process of the present invention comprises a pre-treatment step a') subsequently to the step a) of obtaining the waste polymer material (1) and step b) of contacting the waste polymer material (1) with the dissolving solvent (3) (cf. Figure 5). Such a pre-treatment step can comprise extraction steps and/or a melting step. Preferably, the pre-treatment step a') comprises a melting step. In an especially preferred embodiment of the present invention, the pre-treatment step a') comprises a first extraction step, a subsequent melting step and optionally another second extraction step subsequently to the melting step.

In case the pre-treatment step a') comprises an extraction step, the waste polymer material (1) is contacted with an extracting solvent (3e) to remove unwanted material present in the waste polymer material (1). Therefore, the extracting solvent (3e) has preferably the same boiling point at 1 bar pressure as the dissolving solvent (3). More preferably, the extracting solvent (3e) is identical to the dissolving solvent (3). Generally, the conditions chosen in step a') are milder than those in step b), whereas milder defines lower temperatures and lower pressures. Generally, the conditions in step a') are chosen not to dissolve the target polyolefin, but only other components.

In case the pre-treatment step a') comprises a melting step, the waste polymer material (1) is fed to an extruder, where the polymer is firstly melted (cf. Figure 6). Subsequently and preferably, the polymer melt is fed to a melt pump to increase the pressure in the melt. Higher pressures in the melt have the advantage that the ability to screen the material on solid particles and impurities via melt sieves is increased. Furthermore, feeding polymer material to the separation process later on is ensured.

In case the pre-treatment step a') comprises a melting step, the extracting solvent (3e) is mixed with the molten polymer in a mixing device, preferably downstream of the melt pump. This enhances rapid mixing of the extracting solvent (3e) with the molten polymer. The final concentration of the extracting solvent (3e) in the mixture of molten polymer and extracting solvent (3e) is preferably from 1.0 to 95 wt.-%. Preferably, the mixing device is a static mixer or a dynamic mixer, more preferably a static mixer having the advantage of low maintenance costs (cf. Figure 6).

During the mixing between the extracting solvent (3e) and the molten polymer a homogenous polymer mixture can be created. In such a case it is beneficial, if the extracting solvent (3e) is identical to the dissolving solvent (3) used in the dissolving step b). Such a setup has the advantage that the dissolution times in the dissolving step b) are significantly reduced. Furthermore, the process can be performed in an continuous manner.

In case the extracting solvent (3e) is again removed from the polymer melt, the step can be considered as the second extraction step following up the melting step.

The addition of extracting solvent (3e) can be carried out in a single step or in multiple steps. Multiple steps can enhance the extraction and dissolution even further. Preferably, the temperatures and pressures used in step a') are from 150 to 250 °C and from 50 to 150 bar.

A major advantage of the step of melting the polymer is that preferably the melt can be filtered and therefore impurities not being in the molten state can be removed before step b). Furthermore, such a setup provides the possibility to degass gaseous components such as water and volatiles if a degassing dome is additionally being used. Another advantage is that the melt bulk density is relatively high in comparison to the solid polymer. This enhances the flowability and makes it easier to feed the polymer to the contacting step b). Moreover, the process can now be carried out in continuous mode and can be simplified by removal of the extraction step. Finally, in case the extraction step is removed from the process, only one solvent cycle is needed, further not only reducing the complexity of the process, but also the need for material and energy consumption.

## Claims

1. A solvent-based recycling process for recycling waste polymer material (1), the waste polymer material (1) comprising at least one polyolefin (2), the process comprising the steps of
a) obtaining the waste polymer material (1) comprising the at least one polyolefin (2);
b) contacting the waste polymer material (1) with at least one dissolving solvent (3) yielding a slurry stream (4) of polymer solution (5) and undissolved solids (6);
c) screening the slurry stream (4) yielding the undissolved solids (6) and a stream of the polymer solution (5);
d) vapor-liquid separating the stream of polymer solution (5) into a polymer-lean vapor stream (9) and a polymer-rich condensed stream (10), wherein the polymer-lean vapor stream (9) is reintroduced into the contacting step b) after purification and upon adjustment of temperature and pressure;
e) recovering the at least one polyolefin (2) from the polymer-rich condensed stream (10);
wherein the at least one dissolving solvent (3) has a boiling point temperature at 1 bar of equal to or more than 70 °C
**characterized in that**
the process further comprises subsequent to step c) and preceding step d) the step of:
c") liquid-liquid separating the stream of the polymer solution (5) into a polymer-lean stream (7) and a polymer-rich stream (8), wherein the polymer-rich stream (8) is fed to step d) and the polymer-lean stream (7) is recycled to contacting step b).

2. The solvent based recycling process according to claim 1, wherein step c) comprises the step of solid-liquid separating the undissolved solids (6) from the polymer solution (5).

3. The solvent based recycling process according to any of the preceding claims, the process further comprising a homogenization step c') carried out subsequently to step c) a preceding step c") receiving the polymer solution (5) and yielding a homogenized polymer solution (5'), wherein the homogenized polymer solution (5') is fed to step c").

4. The solvent based recycling process according to any of the preceding claims, wherein the process further comprises subsequently to step a) and preceding step b) the step of:
a') extracting the waste polymer material (1) with at least one extracting solvent (3e) or melting the waste polymer material (1).

5. The solvent based recycling process according to claim 4, wherein the step a') is melting the waste polymer material (1) yielding a molten waste material (1a).

6. The solvent based recycling process according to claim 5, wherein in step a') the molten waste material (1a) is mixed with the dissolving solvent (3) in a mixing device.

7. The solvent based recycling process according to any of the preceding claims 2 to 7, wherein step c") is carried out at least twice so that the polymer-lean stream (7₁) of a first step c"₁) is fed to a second step c"₂).

8. The solvent based recycling process according to any of the preceding claims, wherein step d) is carried out at least twice in that the polymer-rich condensed stream (10) of a first step d') is fed to a second step d").

## Patentansprüche

1. Lösungsmittelbasiertes Recyclingverfahren zum Recyceln von Polymerabfallmaterial (1) umfassend zumindest ein Polyolefin (2), wobei das Verfahren die folgenden Schritte umfasst:
a) Erhalten des Polymerabfallmaterials (1), das das zumindest eine Polyolefin (2) umfasst;
b) Inkontaktbringen des Polymerabfallmaterials (1) mit zumindest einem Lösungsmittel (3), wodurch ein Aufschlämmungsstrom (4) von Polymerlösung (5) und ungelösten Feststoffen (6) erhalten wird;
c) Sieben des Aufschlämmungsstroms (4), wodurch die ungelösten Feststoffe (6) und ein Strom der Polymerlösung (5) erhalten werden;
d) Dampf-Flüssigkeits-Trennen des Stroms der Polymerlösung (5) in einen polymerarmen Dampfstrom (9) und einen polymerreichen kondensierten Strom (10), wobei der polymerarme Dampfstrom (9) nach Aufreinigung und nach Einstellung von Temperatur und Druck erneut in den Schritt des Inkontaktbringens b) eingeführt wird;
e) Rückgewinnen des zumindest einen Polyolefins (2) aus dem polymerreichen kondensierten Strom (10);
wobei das zumindest eine Lösungsmittel (3) eine Siedepunkttemperatur bei 1 bar von gleich oder mehr als 70 °C aufweist,
**dadurch gekennzeichnet, dass**
das Verfahren ferner nach Schritt c) und vor Schritt d) den folgenden Schritt umfasst:
c") Flüssig-Flüssig-Trennen des Stroms der Polymerlösung (5) in einen polymerarmen Strom (7) und einen polymerreichen Strom (8), wobei der polymerreiche Strom (8) Schritt d) zugeführt wird und der polymerarme Strom (7) zu dem Schritt des Inkontaktbringens b) recycelt wird.

2. Lösungsmittelbasiertes Recyclingverfahren nach Anspruch 1, wobei Schritt c) den Schritt des Feststoff-Flüssigkeits-Trennens der ungelösten Feststoffe (6) von der Polymerlösung (5) umfasst.

3. Lösungsmittelbasiertes Recyclingverfahren nach einem der vorhergehenden Ansprüche, wobei das Verfahren ferner einen Homogenisierungsschritt c') umfasst, der nach Schritt c) und vor Schritt c") durchgeführt wird, wobei der Homogenisierungsschritt die Polymerlösung (5) aufnimmt und eine homogenisierte Polymerlösung (5') ergibt, wobei die homogenisierte Polymerlösung (5') Schritt c") zugeführt wird.

4. Lösungsmittelbasiertes Recyclingverfahren nach einem der vorhergehenden Ansprüche, wobei das Verfahren ferner nach Schritt a) und vor Schritt b) den folgenden Schritt umfasst:
a') Extrahieren des Polymerabfallmaterials (1) mit zumindest einem Extraktionslösungsmittel (3e) oder Schmelzen des Polymerabfallmaterials (1).

5. Lösungsmittelbasiertes Recyclingverfahren nach Anspruch 4, wobei Schritt a') das Schmelzen des Polymerabfallmaterials (1) ist, wodurch ein geschmolzenes Abfallmaterial (1a) erhalten wird.

6. Lösungsmittelbasiertes Recyclingverfahren nach Anspruch 5, wobei in Schritt a') das geschmolzene Abfallmaterial (1a) mit dem Lösungsmittel (3) in einer Mischvorrichtung gemischt wird.

7. Lösungsmittelbasiertes Recyclingverfahren nach einem der vorhergehenden Ansprüche 2 bis 6, wobei Schritt c") zumindest zweimal durchgeführt wird, so dass der polymerarme Strom (7₁) eines ersten Schritts c"₁) einem zweiten Schritt c"₂) zugeführt wird.

8. Lösungsmittelbasiertes Recyclingverfahren nach einem der vorhergehenden Ansprüche, wobei Schritt d) zumindest zweimal durchgeführt wird, indem der polymerreiche kondensierte Strom (10) eines ersten Schritts d') einem zweiten Schritt d") zugeführt wird.

## Revendications

1. Procédé de recyclage basé sur solvant pour recycler des déchets de matériau polymère (1), les déchets de matériau polymère (1) comprenant au moins une polyoléfine (2), le procédé comprenant les étapes consistant à
a) obtenir les déchets de matériau polymère (1) comprenant l'au moins une polyoléfine (2) ;
b) mettre en contact les déchets de matériau polymère (1) avec au moins un solvant de dissolution (3) pour obtenir un flux de suspension (4) de solution de polymère (5) et de solides non dissous (6) ;
c) cribler le flux de suspension (4) pour obtenir les solides non dissous (6) et un flux de la solution de polymère (5) ;
d) séparer par séparation vapeur-liquide le flux de solution de polymère (5) en un flux de vapeur pauvre en polymère (9)et un flux condensé riche en polymère (10), dans lequel le flux de vapeur pauvre en polymère (9) est réintroduit dans l'étape b) consistant à mettre en contact après purification et lors de l'ajustement de la température et de la pression ;
e) récupérer l'au moins une polyoléfine (2) depuis le flux condensé riche en polymère (10) ;
dans lequel l'au moins un solvant de dissolution (3) a une température d'ébullition à 1 bar supérieure ou égale à 70 °C
**caractérisé en ce que**
le procédé comprend en outre consécutivement à l'étape c) et antérieurement à l'étape d) l'étape consistant à :
c") séparer par séparation liquide-liquide le flux de la solution de polymère (5) en un flux pauvre en polymère (7) et un flux riche en polymère (8), dans lequel le flux riche en polymère (8) est introduit dans l'étape d) et le flux pauvre en polymère (7) est recyclé vers l'étape b) consistant à mettre en contact.

2. Procédé de recyclage basé sur solvant selon la revendication 1, dans lequel l'étape c) comprend l'étape consistant à séparer par séparation solide-liquide les solides non dissous (6) de la solution de polymère (5).

3. Procédé de recyclage basé sur solvant selon l'une quelconque des revendications précédentes, le procédé comprenant en outre une étape d'homogénéisation c') mise en œuvre consécutivement à l'étape c) et antérieurement à l'étape c") consistant à recevoir la solution de polymère (5) et à obtenir une solution de polymère homogénéisée (5'), dans lequel la solution de polymère homogénéisée (5') est introduite dans l'étape c").

4. Procédé de recyclage basé sur solvant selon l'une quelconque des revendications précédentes, dans lequel le procédé comprend en outre consécutivement à l'étape a) et antérieurement à l'étape b) l'étape consistant à :
a') extraire les déchets de matériau polymère (1) avec au moins un solvant d'extraction (3e) ou faire fondre les déchets de matériau polymère (1).

5. Procédé de recyclage basé sur solvant selon la revendication 4, dans lequel l'étape a') consiste à faire fondre les déchets de matériau polymère (1) pour obtenir des déchets de matériau fondus (1a).

6. Procédé de recyclage basé sur solvant selon la revendication 5, dans lequel dans l'étape a') les déchets de matériau fondus (1a) sont mélangés au solvant de dissolution (3) dans un dispositif de mélangeage.

7. Procédé de recyclage basé sur solvant selon l'une quelconque des revendications 2 à 7 précédentes, dans lequel l'étape c") est mise en œuvre au moins deux fois de telle sorte que le flux pauvre en polymère (7₁) d'une première étape c"₁) est introduit dans une seconde étape c"₂).

8. Procédé de recyclage basé sur solvant selon l'une quelconque des revendications précédentes, dans lequel l'étape d) est mise en œuvre au moins deux fois de telle sorte que le flux condensé riche en polymère (10) d'une première étape d') est introduit dans une seconde étape d").
